# EUROPEAN PATENT SPECIFICATION

(11) **EP 0 245 879 B1**
(45) Date of publication and mention of the grant of the patent: **26.07.1995**
(21) Application number: 87107849.9
(22) Date of filing: 02.08.1985
(51) Int. Cl.: F16G 13/07

(54) **Multiple link chain**
Kette mit gleichen Gliedern
Chaîne à maillons identiques

(30) Priority: 09.08.1984 US 639308
(43) Date of publication of application: 19.11.1987
(62) Divisional of application: 85109727.9
(73) Proprietor: The Laitram Corporation, Harahan Louisiana 70123 (US)
(72) Inventor: Lapeyre, James M., New Orleans Louisiana 70150 (US)
(74) Representative: Kraus, Walter, Dr.

(56) References cited:
- EP-A- 0 113 909
- DE-C- 51 232
- DE-C- 54 663
- FR-A- 948 166
- GB-A- 211 957
- US-A- 2 766 635
- US-A- 3 069 923

## Description

This invention relates to a multiple link chain composed of a plurality of identical links, each comprising:
(a) a link body having a central portion extending across the width of the link body, and an arm extending outwardly form the central portion along the longitudinal axis of the link body;
(b) one end of said link body having a post on the free end of said arm, said post being disposed along a first pivot axis orthogonal to the longitudinal axis of the link body and having oppositely extending first and second cylindrical post ends;
(c) the other end of said link body having first and second arcuate hook portions each having a first surface that defines an arcuate slot, said slots being adapted to receive said first and second cylindrical post ends, each of said arcuate hook portions being fixed to said central portion such that said first surfaces of said arcuate hook portions are integrally formed with said central portion of said link body, and said arcuate hook portions being disposed along a second pivot axis orthogonal to the longitudinal axis and parallel to the first pivot axis;
(d) a wall on said link body intermediate said first and second axes defining a recess adapted for receiving a tooth of a sprocket wheel, and/or a tooth adapted for engaging a recess of a sprocket wheel, and/or beveled surfaces for mating with a V-pulley; and
(e) the arcuate hook portions of a link body being pivotally attachable to the post ends of an adjacent link, the pivotably engaged links having a first pivot axis of one link substantially coincident with the second pivot axis of the adjacent link.

Various forms of multiple link chains are known and generally include links which are pivotally connected to like links by means of pivot pins to permit relative pivotal movement of adjacent links about the axis of the pivot pin. The chain is usually driven by a sprocket wheel is which sprocket teeth are arranged to engage the link ends through which the pivot pin is disposed for driving of the chain at the link ends.

A novel link chain has been proposed in which a driving tooth on each link protrudes therefrom at a position intermediate the pivot axes at the link ends. The location of the driving tooth midway between the pivot axes and the configuration of the driving tooth surfaces, when employed in conjunction with an associated sprocket wheel configuration, exhibits substantially low scrubbing action and small chordal action. Scrubbing action is known in relation to chain belts wherein the link teeth and sprocket teeth engage one another with a scrubbing or rubbing contact. Chordal action in chain drives is also known and comprises a vibratory motion of the chain as it engages the sprocket wheel.

Furthermore, a multiple link chain of the type mentioned in the beginning is disclosed in DE-C-54 663, the links of which are further designed such that
(a) each arcuate hook portion is connected to the central portion only by a web having a part of the aforementioned first surface which is integrally formed with the central portion, and
(b) each slot formed by the arcuate hook portions is a completely open slot, i.e. open in both directions of the aforementioned second pivot axis.

In brief, the present invention provides a multiple link chain composed of a plurality of interconnected identical links which are attachable and detachable without need for pivot pins or any separate connecting hardware.

The multiple link chain of the present invention is characterized in that
(1) each of said arcuate hook portions having a second surface that cooperative with said first surface defines said arcuate slot as a partially open slot, said second surface of each of said arcuate hook portions being integrally formed with a respective solid side portion, said solid side portions being joined by said solid central portion such that said solid central portion is bounded by said solid side portions; and
(2) said arm extending outwardly from said solid central portion beyond confronting ends of said solid side portions.

According to one embodiment a center tooth can be disposed between the pivot axes of each links for efficient drive about an associated sprocket wheel with minimal scrubbing and chordal action. Each link includes a link body having respective ends spaced along the longitudinal axis of the link body, with a pivot axis defined at each end and a driving tooth disposed midway between the pivot axes. One end of the link includes oppositely-extending cylindrical posts disposed along a pivot axis which is orthogonal to the longitudinal axis of the link body. The other end of the link includes arcuate hook portions which are pivotably attachable to the posts of an adjacent link for pivotable movement of attached links about the pivot axis. The center tooth is engageable with an associated sprocket wheel for driving of the link chain. The sides of each link can include beveled surfaces for mating with a V-pulley such that the link chain can be alternatively driven or guided by a V-pulley rather than, or in addition to, a sprocket wheel. In another embodiment, each of the links of the link chain of the present invention have a recess for receiving a tooth of a sprocket wheel. The sprocket wheel tooth receiving recess can advantageously be either centrally formed in the link body, or laterally formed to one or both sides of the link body.

In another preferred embodiment, the links are symmetrical about a central plane extending through the link body such that either the top or bottom of the links can be engaged by a sprocket wheel or a V-pulley. In other preferred embodiments, the links are asymmetrical about a central plane and can be engaged from the bottom either by a sprocket wheel or a V-pulley. In preferred construction, the links of the several embodiments are molded of a suitable plastic material as an integral unitary structure.

The link chain can be used as a transmission chain or as a conveyor chain. As a conveyor, the link can be composed of a plurality of link portions, each of a type substantially as described above, such that the conveyor link has an array of post ends and an array of hook ends which are mateable with like conveyor links. The conveyor links can be fabricated in multiples of a given width so that conveyors can be built up of any intended overall width.

The invention will- be more fully understood from the following detailed description taken in conjunction with the accompanying drawings, in which:
- Fig. 1: is a pictorial view of a link according to the invention;
- Fig. 2: is a side elevation view of the link of Fig. 1;
- Fig. 3: is an end elevation view of the post end of the link of Fig. 1;
- Fig. 4: is an end elevation view of the-hook end of the link of Fig. 1;
- Fig. 5: is a top view of the link of Fig. 1;
- Fig. 6: is a bottom view of the link of Fig. 1;
- Fig. 7: is a pictorial view of the interconnected links of Fig. 1 forming a link chain;
- Fig. 8: is an elevation view of the link chain in engagement with a sprocket wheel;
- Fig. 9: is an elevation view taken along line 9-9 of Fig. 8;
- Fig. 10: is an elevation view of the link chain in engagement with a V-pulley;
- Fig. 11: is an elevation view taken along 11-11 of Fig. 10;
- Fig. 12: is a pictorial view of a conveyor link according to the invention;
- Fig. 13: is a top view of the link of Fig. 12;
- Fig. 14: is a sectional view taken along line 14-14 of Fig. 13;
- Fig. 15: is a sectional view taken along line 15-15 of Fig. 13;
- Fig. 16: is a bottom view of the conveyor link of Figs. 12 and 13;
- Fig. 17: is an elevation view illustrating the manner of mating of adjacent links;
- Fig. 18: is an elevation view of a pair of interconnected links illustrating the maximum angular orientation therebetween;
- Fig. 19: is an elevation view of the conveyor link chain in engagement with a sprocket wheel and in association with a transfer comb;
- Fig. 20: is a top view of the conveyor link chain and transfer comb of Fig. 19;
- Fig. 21: is an end elevation view of the conveyor link chain, sprocket wheel, and transfer comb of Fig. 19, and taken along line 21-21 of Fig. 20;
- Fig. 22: is a diagrammatic view of a conveyor chain composed of links of different widths;
- Fig. 23: is a sectional view illustrating a link having a tooth receiving recess; and
- Fig. 24: is a sectional view illustrating the manner of engagement of the conveyor link of Figs. 12 and 15 with a toothed sprocket wheel.

The link chain embodiment of the invention is composed of interconnected links, each of which is of identical construction and which preferably are of integral molded plastic construction. Each link 10 has a hook end 12 and a post end 14, the post end of each link capable of being interconnected to the hook end of an adjacent link to form a chain of intended length. Each link includes a central portion 16 extending across the width of the link and joining side portions 18 and 20. An arm 22 outwardly extends from central portion 16 beyond the confronting ends of side portions 18 and 20 and to which is affixed a transversely extending post 24 which is of cylindical cross-section and which has oppositely extending post ends. The hook end 12 of the link includes first and second curved end portions 26 and 28 which are transversely spaced by an intermediate gap 30. The end portions 26 and 28 are joined to respective side portions 18 and 20 and are also joined to central portion 16 by a web 32. The outer surfaces of end portion 26 and 28 are cylindrical as are the inner surfaces of the end portions against which portions post 24 of an adjacent link is in rotatable engagement when the links are interconnected.

The central portion 16 includes a tooth 34 formed by beveled surfaces 36 and 38. A similar tooth 40 is provided on the opposite surface of the link formed by beveled surfaces 42 and 44. The tooth 34 of each link is in alignment with the tooth 40 of that link, and is symmetrically disposed about a plane extending through the central portion 16 orthogonal to the longitudinal axis of the link. Each side portion 18 and 20 includes beveled surfaces 46 and 48 which form an outwardly extending V-shaped side for mating with a V-pulley which can be employed to drive or guide the interconnected links. The beveled surfaces on each side portion are cut away at the hook end as shown by reference numeral 50 and at the post end as shown by reference numeral 52 such that effectively continuous beveled surfaces are provided for mating with a V-pulley. The extended ends 53 serve as stops to limit the maximum angular movement between adjacent links.

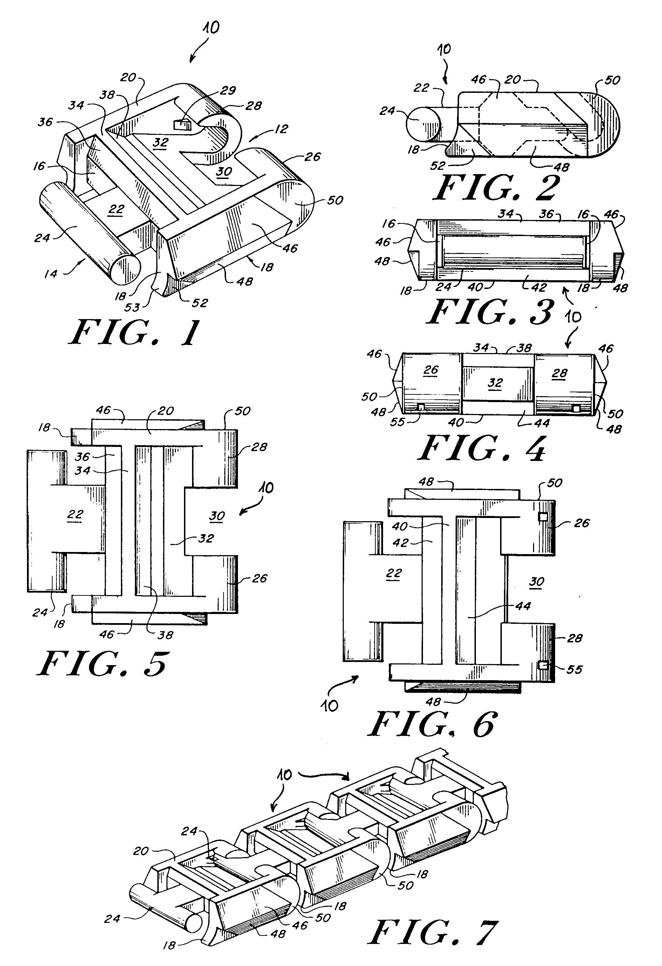

The post 24 of each link is adapted to be disposed and retained within the end portions 26 and 28 of an adjacent link, as illustrated in Fig. 7. The post is retained within the end portions by detents 29, and the post and associated end portions provide a journal bearing for relative rotation between the thus connected links. The openings 55 are mold holes for mold tooling employed in forming the detents in the illustrated embodiment. The tooth 34 and tooth 40 are each disposed midway between the axis of rotation of post 24 and axis of rotation of end portions 26 and 28. The links 10 are symmetrical about a central longitudinal plane such that either the top or bottom of the interconnected links can be driven. The pivot axis of the post end is substantially coincident with the pivot axis of the hook end of a mated link.

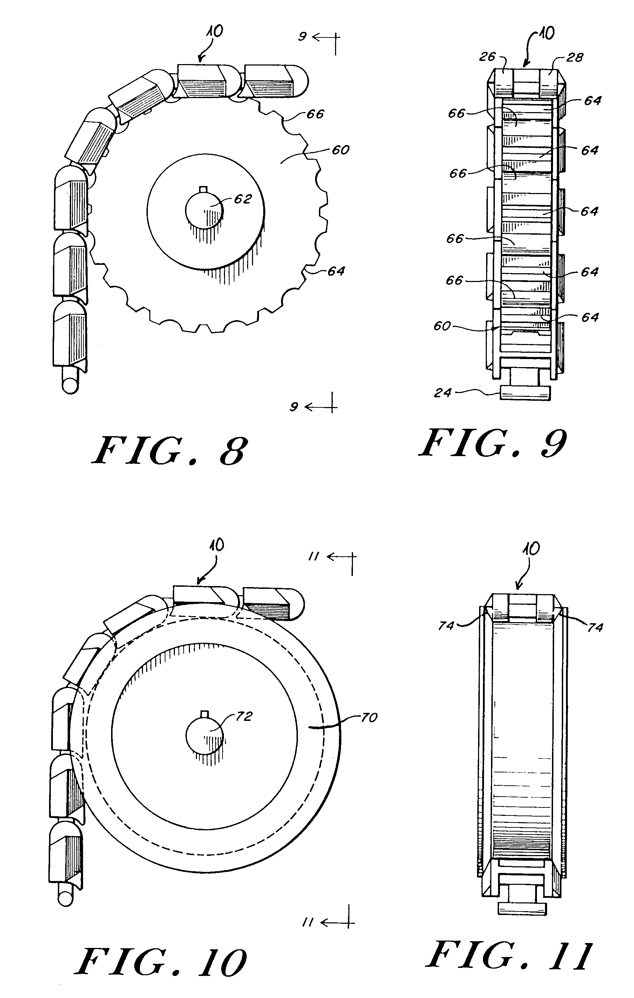

The chain formed of interconnected links 10 can be positively driven by an associated sprocket as shown in Figs. 8 and 9. A sprocket wheel 60 is rotatable on a shaft 62 and includes a plurality of recesses 64 regularly spaced about the periphery of the sprocket wheel and adapted to mate with either tooth 34 or tooth 40, depending on the orientation of the links, for driving of the links of the chain. A curved transverse groove 66 is provided in the periphery of sprocket wheel 60 midway between adjacent sprocket recesses 64 to provide clearance for the pivotably interconnected ends of the links.

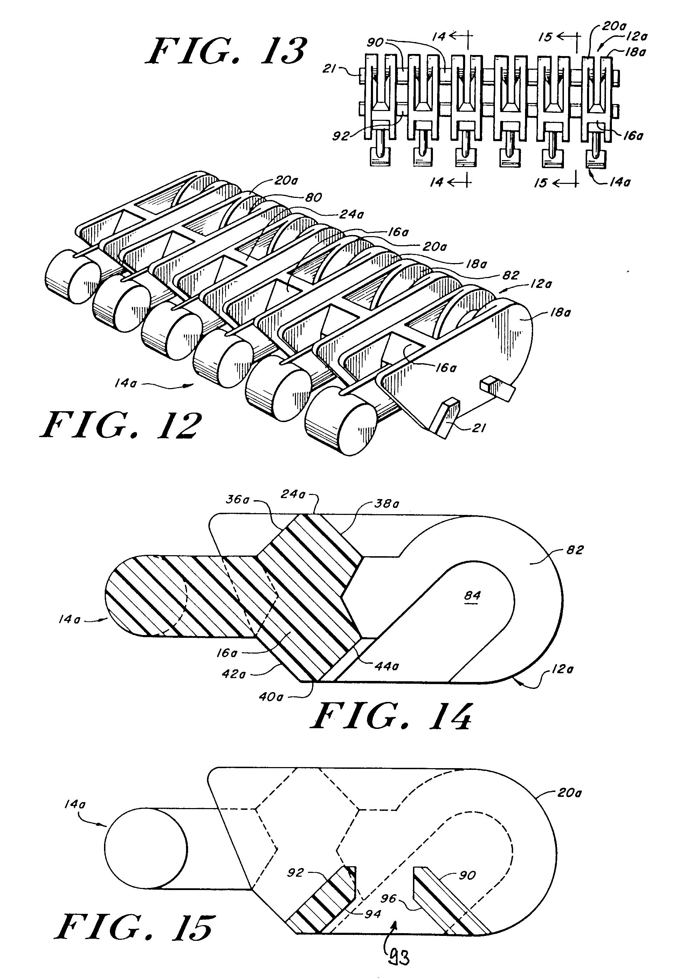

The link chain composed of interconnected links 10 can also be driven by a V-pulley as illustrated in Figs. 10 and 11. The V-pulley 70 is rotatable on a shaft 72 and includes a peripheral pair of confronting flanges 74 which are outwardly tapered to provide the well known V-pulley configuration. The taper of the V-pulley flanges is adapted to mate with the taper of side surfaces 46 or 48 of links 10.

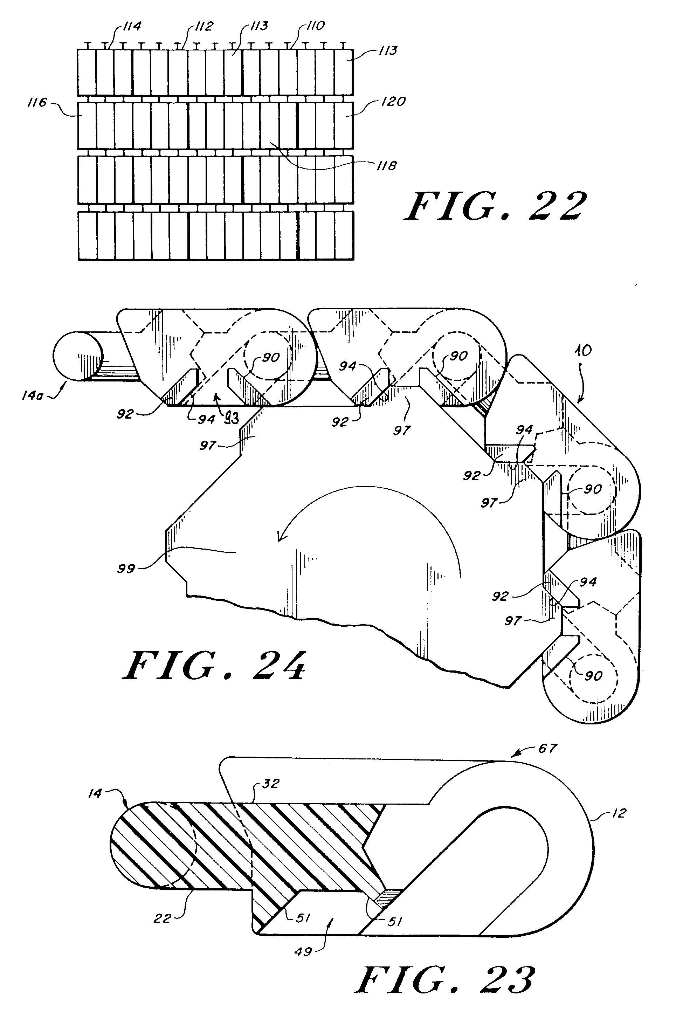

As shown in Fig. 23, another link generally designated 67 of a multiple link chain embodying the present invention is driven by teeth received into recesses provided therefor on the link. The link 67 is substantially identical to that described above except that the central teeth thereof are removed, and are replaced by at least one recess generally designated 49 that is formed integrally by walls 51 that extend between the sides of the link 67. The recess 49 of the link 67 is preferably formed at an off-center location as defined between the pivot axes. The walls 51 are so inclined that the recess 49 is adapted for mating with a drive tooth of a sprocket wheel, not shown.

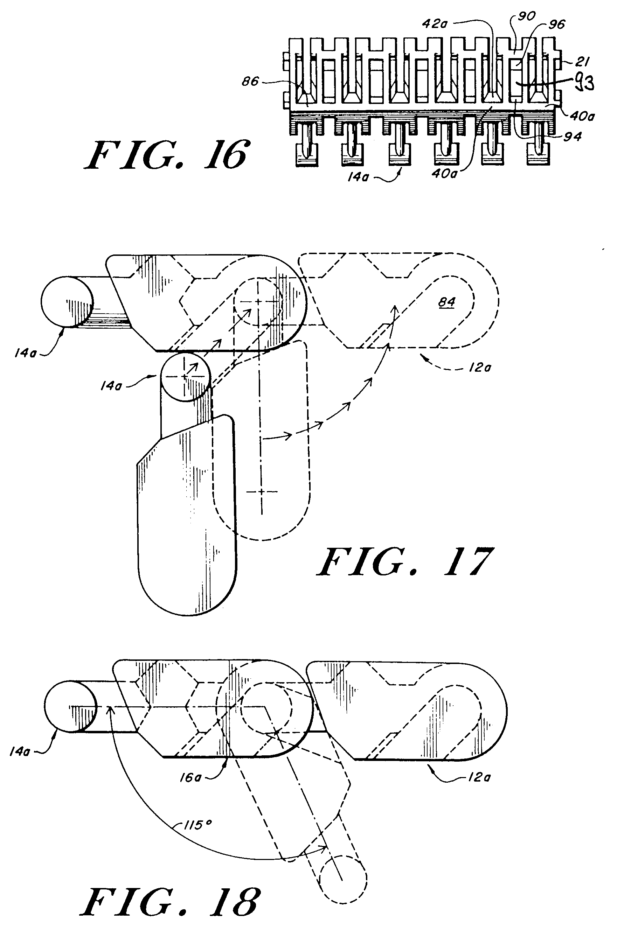

An embodiment is shown in Figs. 12-21 which is especially suited to use in a conveyor chain. Referring to Figs. 12-16, the conveyor link is composed of an array of link portions, each of which is substantially similar to the link described above in connection with the description of Figs. 1-11. Each link portion includes a hook end 12a and a post end 14a, a central portion 16a extending across the width of the link portion and joining side portions 18a and 20a. Each central portion 16a includes a tooth 24a formed by beveled surfaces 36a and 38a. A similar tooth 40a is provided on the opposite surface of the link portion and formed by beveled surfaces 42a and 44a. The teeth 24a and 40a are in alignment such that either the top or bottom of the interconnected links can be driven or mated with an associated sprocket. The hook end includes confronting raised arcuate portions 80 and 82 which define a recess 84 into which the post end of an adjacent link is seated for rotatable engagement about the pivot axis of the mated links. As seen in Fig. 16, the link portions are joined together by intermediate sections 86 which form a contiuation of the teeth 40a. The link portions are also interconnected by web portions 90 provided between the adjacent link portions.

The links are mated with adjacent links by insertion of the post ends 14a into the confronting hook ends 12a of an adjacent link, as illustrated in Fig. 17. With one link generally perpendicular to the other link, the post ends 14a are guided into the recesses 84 of the respective hook ends, and the link is then pivoted into colinear arrangement with the mated link. Thus, the links are readily interconnected by sliding the post end of a first link into the confronting hook end of a second link and then rotating the links into position. Detachment of the links is accomplished by the reverse procedure, namely, downward rotation of one link and sliding removal of the mated ends. The mated links can rotate relative to each other over a substantial extent without disengagement. In the illustrated embodiment, the mated links can have a maximum angular orientation of about 115°, as shown in Fig. 18, before the post ends will begin to disengage from the hook ends.

The link portions of each link are joined together with webs 90 provided between adjacent hook ends, and by webs 86 in alignment between adjacent teeth 40a. As best seen in the bottom view of Fig. 16, the intermediate webs 86 and the teeth 40a form an effectively continuous tooth across the width of the link. The webs each have a surface 94 in alignment with the surface 42a. The webs 90 have a beveled surface 96 for added strength. Lateral extensions 21 beyond the link sides can be provided to maintain spacing between laterally adjacent links in an assembled belt, or spacing from support structures.

The conveyor links can be formed of any convenient length and width to suit intended requirements. The conveyor links can be fabricated in multiples of a given width such that a conveyor of an intended overall width can be built up by an array of interleaved links. For example, as shown in Fig. 22, two conveyor links 110 and 112, each having six portions 113 are laterally adjacent to a link 114 having three link portions. These links are mated to link 116 and 118, each of six link portions, and link 120 of three link portions in an interleaved manner, as illustrated, to provide a wide conveyor belt which retains its lateral rigidity because of the interleaved connection of the multiple width links.

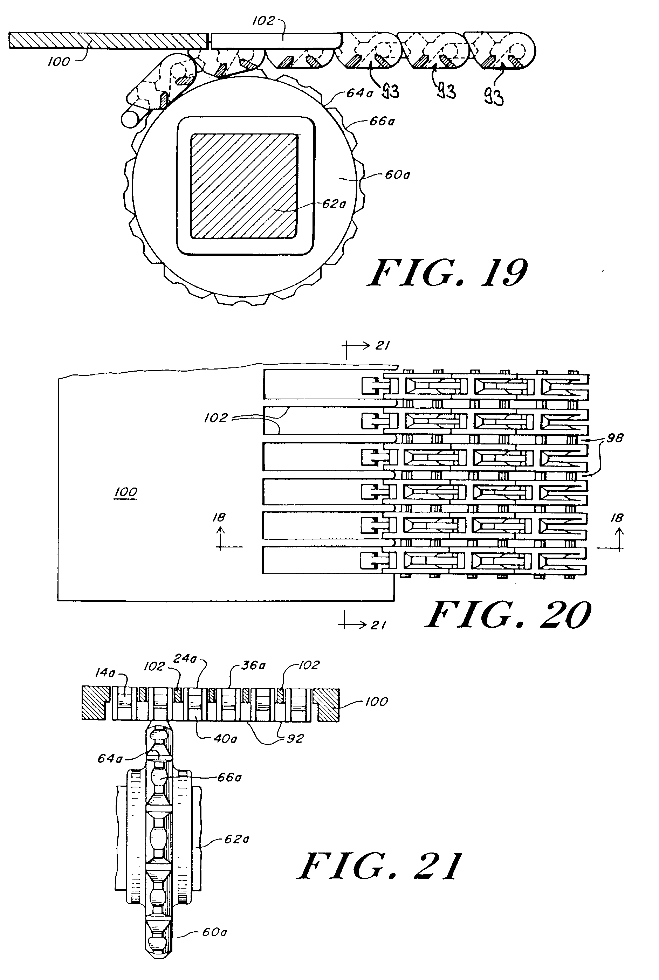

The interconnected conveyor links are driven by an associated sprocket wheel as shown in Figs. 19 and 20, similarly as described above. The sprocket wheel 60a is affixed to a square shaft 62a and includes a plurality of recesses 64a regularly spaced about the periphery of the sprocket wheel and adapted to mate with tooth 24a or 40a. A curved transverse groove 66a is provided in the periphery of the sprocket wheel midway between sprocket recesses 64a to provide clearance for the interconnected link ends. At least two spaced sprocket wheels are employed on a common shaft to drive the conveyor chain. Typically, one sprocket wheel is fixed to its driving shaft, and the other wheel is axially moveable on the shaft to accommodate movement due to thermal expansion and contraction of the links. Additional sprocket wheels can be employed across the width of the conveyor link to provide intended driving force. For some purposes, a sprocket wheel can be provided for each link portion of a conveyor link.

As seen in Fig. 24, the webs 90, 92 of the link portions define a plurality of teeth receiving recesses 93, and one or more teeth 97 of a sprocket wheel 99 are receivable therein to drive the confronting surfaces 94 of the several links. The extensions 21 (Fig. 12) can also be employed for this purpose. The link portions of each link of the conveyor chain can thereby be driven at one or more of the recesses of the several link portions by one or more teeth of a sprocket wheel.

As evident from Fig. 20, the interconnected links have longitudinal parallel channels 98, which extend along the length of the interconnected links such that a conveyor transfer comb clan be inserted within these channels for transfer of a product onto or off of the conveyor. The comb 100 includes a plurality of parallel fingers 102, each being disposed within a longitudinal channel 98 and with its top surface substantially coplanar with the top surface of the links, as shown in Figs. 19 and 21.

The links of the embodiments described above are each preferably formed as a unitary structure by plastic molding. Any suitable plastic material can be employed which provides the requisite structural and environmental properties for the intended purpose.

The invention is not to be limited to what has been particularly shown and described except as indicated in the appended claims.

## Claims

1. A multiple link chain composed of a plurality of identical links (10, 67, 110, 112, 114, 116, 118, 120), each comprising:
(a) a link body having a central portion (16, 16a) extending across the width of the link body, and an arm (22) extending outwardly form the central portion (16, 16a) along the longitudinal axis of the link body;
(b) one end (14,14a) of said link body having a post (24) on the free end of said arm (22), said post (24) being disposed along a first pivot axis orthogonal to the longitudinal axis of the link body and having oppositely extending first and second cylindrical post ends;
(c) the other end (12, 12a) of said link body having first and second arcuate hook portions (26, 28, 80, 82) each having a first surface that defines an arcuate slot, said slots being adapted to receive said first and second cylindrical post ends, each of said arcuate hook portions (26, 28, 80, 82) being fixed to said central portion (16, 16a) such that said first surfaces of said arcuate hook portions (26, 28, 80, 82) are integrally formed with said central portion of said link body, and said arcuate hook portions (26, 28, 80, 82) being disposed along a second pivot axis orthogonal to the longitudinal axis and parallel to the first pivot axis;
(d) a wall (21; 36, 38; 36a, 38a; 42, 44; 42a, 44a; 46, 48; 51; 90, 92) on said link body intermediate said first and second axes defining a recess (49, 93) adapted for receiving a tooth (97) of a sprocket wheel (99), and/or a tooth (24a, 34, 40, 40a) adapted for engaging a recess (64, 64a) of a sprocket wheel (60, 60a), and/or beveled surfaces (46, 48) for mating with a V-pulley (70); and
(e) the arcuate hook portions (26, 28, 80, 82) of a link body being pivotally attachable to the post ends (14, 14a) of an adjacent link (10, 67, 110, 112, 114, 116, 118, 120), the pivotably engaged links (10, 67, 110, 112, 114, 116, 118, 120) having a first pivot axis of one link (10, 67, 110, 112, 114, 116, 118, 120) substantially coincident with the second pivot axis of the adjacent link (10, 67, 110, 112, 114, 116, 118, 120);
characterized in that
(1) each of said arcuate hook portions (26, 28, 80, 82) having a second surface that cooperative with said first surface defines said arcuate slot as a partially open slot, said second surface of each of said arcuate hook portions being integrally formed with a respective solid side portion (18, 20, 18a, 20a), said solid side portions (18, 20, 18a, 20a) being joined by said solid central portion (16, 16a) such that said solid central portion (16, 16a) is bounded by said solid side portions (18, 20, 18a, 20a); and
(2) said arm (22) extending outwardly from said solid central portion (16, 16a) beyond confronting ends of said solid side portions (18, 20, 18a, 20a).

2. The multiple link chain of claim 1, characterized in that said recess (49) or tooth (24a, 34, 40, 40a) is centrally located between said first and second pivot axes.

3. The multiple link chain of claim 1, characterized in that said recess (93) is closer to one of said first and second pivot axes than to the other one of said first and second pivot axes in the longitudinal direction of the link body.

4. The multiple link chain of claim 1, 2 or 3, characterized in that said wall (36, 38; 36a, 38a; 42, 44, 42a, 44a; 51) extends inwardly through said central portion (16, 16a) from one of said side portions (18, 20; 18a, 20a) and towards the confronting side portion (20, 18; 20a, 18a).

5. The multiple link chain of claim 1, 2, 3 or 4, characterized in that said wall (36, 38; 36a, 38a; 42, 44, 42a, 44a; 51) extends between said side portions (18, 20; 18a, 20a) and through said central portion (16).

6. The multiple link chain of claim 1, 2 or 3, characterized in that said wall (21; 46, 48; 90, 92) extends outwardly from one of said side portions (18, 20; 18a, 20a) and away from the confronting side portion (20, 18; 20a, 18a).

## Patentansprüche

1. Mehrgliedkette, die aus einer Mehrzahl von identischen Gliedern (10, 67, 110, 112, 114, 116, 118, 120) zusammengesetzt ist, von denen jedes folgendes umfaßt:
(a) einen Gliedkörper, der einen mittigen Teil (16, 16a) hat, welcher sich quer über die Breite des Gliedkörpers erstreckt, und einen Arm (22), der sich von dem mittigen Teil (16, 16a) längs der Längsachse des Gliedkörpers nach auswärts erstreckt;
(b) wobei ein Ende (14, 14a) des Gliedkörpers einen Stab (24) auf dem freien Ende des Arms (22) hat, wobei der Stab (24) längs einer ersten Dreh- bzw. Schwenkachse, die senkrecht zu der Längsachse des Gliedkörpers ist, angeordnet ist und ein erstes und zweites zylindrisches Stabende hat, die sich entgegengesetzt erstrecken;
(c) wobei das andere Ende (12, 12a) des Gliedkörpers einen ersten und zweiten bogenförmigen Hakenteil (26, 28, 80, 82) hat, von denen jeder eine erste Oberfläche hat, die einen bogenförmigen Schlitz begrenzt, wobei die Schlitze dazu geeignet sind, das erste und zweite zylindrische Stabende aufzunehmen, wobei jeder der bogenförmigen Hakenteile (26, 28, 80, 82) an dem mittigen Teil (16, 16a) derart befestigt ist, daß die ersten Oberflächen der bogenförmigen Hakenteile (26, 28, 80, 82) integral mit dem mittigen Teil des Gliedkörpers ausgebildet sind, und die bogenförmigen Hakenteile (26, 28, 80, 82) längs einer zweiten Dreh- bzw. Schwenkachse angeordnet sind, die senkrecht zu der Längsachse und parallel zu der ersten Dreh- bzw. Schwenkachse ist;
(d) eine zwischen der ersten und zweiten Achse liegende Wand (21; 36, 38; 36a, 38a; 42, 44; 42a, 44a; 46, 48; 51; 90, 92) auf dem Gliedkörper, die eine Vertiefung (49, 93), welche für die Aufnahme eines Zahns (97) eines Zahnrads bzw. Kettenzahnrads (99) geeignet ist, und/oder einen Zahn (24a, 34, 40, 40a), welcher für den Eingriff mit einer Vertiefung (64, 64a) eines Zahnrads bzw. Kettenzahnrads (60, 60a) geeignet ist, und/oder abgeschrägte Oberflächen (46, 48) zum Eingreifen mit einer V-Scheibe bzw. -Rolle (70) begrenzt; und
(e) wobei die bogenförmigen Hakenteile (26, 28, 80, 82) eines Gliedkörpers dreh- bzw. schwenkbar an den Stabenden (14, 14a) eines benachbarten Glieds (10, 67, 110, 112, 114, 116, 118, 120) anbringbar sind, wobei von den dreh- bzw. schwenkbar in Eingriff befindlichen Gliedern (10, 67, 110, 112, 114, 116, 118, 120) eine erste Dreh- bzw. Schwenkachse von einem Glied (10, 67, 110, 112, 114, 116, 118, 120) im wesentlichen zusammenfallend mit der zweiten Schwenkachse des benachbarten Glieds (10, 67, 110, 112, 114, 116, 118, 120) ist;
dadurch **gekennzeichnet,** daß
(1) jeder der bogenförmigen Hakenteile (26, 28, 80, 82) eine zweite Oberfläche hat, die zusammenwirkend mit der ersten Oberfläche den bogenförmigen Schlitz als einen teilweise offenen Schlitz begrenzt, wobei die zweite Oberfläche von jedem der bogenförmigen Hakenteile integral mit einem jeweiligen massiven Seitenteil (18, 20, 18a, 20a) ausgebildet ist, wobei die massiven Seitenteile (18, 20, 18a, 20a) durch den massiven mittigen Teil (16, 16a) derart verbunden sind, daß der massive mittige Teil (16, 16a) durch die massiven Seitenteile (18, 20, 18a, 20a) begrenzt ist; und
(2) sich der Arm (22) von dem massiven mittigen Teil (16, 16a) auswärts über die gegenüberstehenden Enden der massiven Seitenteile (18, 20, 18a, 20a) hinaus erstreckt.

2. Mehrgliedkette nach Anspruch 1, dadurch **gekennzeichnet,** daß sich die Vertiefung (49) oder der Zahn (24a, 34, 40, 40a) mittig zwischen der ersten und zweiten Dreh- bzw. Schwenkachse befindet.

3. Mehrgliedkette nach Anspruch 1, dadurch **gekennzeichnet,** daß die Vertiefung (93) näher an einer aus der ersten und zweiten Dreh- bzw. Schwenkachse als an der anderen aus der ersten und zweiten Dreh- bzw. Schwenkachse in der Längsrichtung des Gliedkörpers ist.

4. Mehrgliedkette nach Anspruch 1, 2 oder 3, dadurch **gekennzeichnet,** daß sich die Wand (36, 38; 36a, 38a; 42, 44, 42a, 44a; 51) von einem der Seitenteile (18, 20; 18a, 20a) einwärts durch den mittigen Teil (16, 16a) und nach dem gegenüberstehenden Seitenteil (20, 18; 20a, 18a) zu erstreckt.

5. Mehrgliedkette nach Anspruch 1, 2, 3 oder 4, dadurch **gekennzeichnet,** daß sich die Wand (36, 38; 36a, 38a; 42, 44, 42a, 44a; 51) zwischen den Seitenteilen (18, 20; 18a, 20a) und durch den mittigen Teil (16) erstreckt.

6. Mehrgliedkette nach Anspruch 1, 2 oder 3, dadurch **gekennzeichnet,** daß sich die Wand (21; 46, 48; 90, 92) von einem der Seitenteile (18, 20; 18a, 20a) nach auswärts und weg von dem gegenüberstehenden Seitenteil 20, 18; 20a, 18a) erstreckt.

## Revendications

1. Chaîne à maillons comprenant plusieurs maillons identiques (10, 67, 110, 112, 114, 116, 118, 120) ayant chacun :
(a) un corps de maillon ayant une partie centrale (16, 16a) disposée suivant la largeur du corps de maillon, et un bras (22) dépassant vers l'extérieur de la partie centrale (16, 16a) suivant l'axe longitudinal du corps de maillon,
(b) une première extrémité (14, 14a) du corps de maillon ayant une colonne (24) placée à l'extrémité libre du bras (22), la colonne (24) étant disposée le long d'un premier axe de pivotement qui est perpendiculaire à l'axe longitudinal du corps de maillon et ayant des première et seconde extrémités cylindriques de colonne qui sont opposées,
(c) l'autre extrémité (12, 12a) du corps de maillon ayant une première et une seconde partie courbe de crochet (26, 28, 80, 82) ayant chacune une première surface qui délimite une fente courbe, les fentes étant destinées à loger la première et la seconde extrémité cylindrique d'une colonne, chacune des parties courbes de crochet (26, 28, 80, 82) étant fixée à la partie centrale (16, 16a) de manière que les premières surfaces des parties courbes de crochet (26, 28, 80, 82) soient formées solidairement avec la partie centrale du corps de maillon, les parties courbes de crochet (26, 28, 80, 82) étant disposées le long d'un second axe de pivotement qui est perpendiculaire à l'axe longitudinal et parallèle au premier axe de pivotement,
(d) une paroi (21 ; 36, 38 ; 36a, 38a ; 42, 44, 42a, 44a ; 46, 48 ; 51 ; 90, 92) placée sur le corps de maillon entre le premier et le second axe et délimitant une cavité (49, 93) destinée à loger une dent (97) d'une roue dentée (99) et/ou une dent (24a, 34, 40, 40a) destinée à coopérer avec une cavité (64, 64a) d'une roue dentée (60, 60a) et/ou des surfaces inclinées (46, 48) destinées à coopérer avec une poulie en V (70), et
(e) les parties courbes de crochet (26, 28, 80, 82) d'un corps de maillon pouvant être fixées de manière pivotante aux extrémités (14, 14a) de colonne d'un maillon adjacent (10, 67, 110, 112, 114, 116, 118, 120), les maillons coopérant de manière pivotante (10, 67, 110, 112, 114, 116, 118, 120) ayant un premier axe de pivotement d'un premier maillon (10, 67, 110, 112, 114, 116, 118, 120) qui coïncide pratiquement avec le second axe de pivotement du maillon adjacent (10, 67, 110, 112, 114, 116, 118, 120),
caractérisée en ce que :
(1) chacune des parties courbes de crochet (26, 28, 80, 82) a une seconde surface qui, en coopération avec la première surface, délimite la fente courbe sous forme d'une fente partiellement ouverte, la seconde surface de chaque partie courbe de crochet étant formée afin qu'elle soit solidaire d'une partie latérale pleine respective (18, 20, 18a, 20a), les parties latérales pleines (18, 20, 18a, 20a) étant raccordées par la partie centrale pleine (16, 16a) afin que la partie centrale pleine (16, 16a) soit délimitée par les parties latérales pleines (18, 20, 18a, 20a), et
(2) le bras (22) est dirigé vers l'extérieur de la partie centrale pleine (16, 16a) au-delà des extrémités en regard des parties latérales pleines (18, 20, 18a, 20a).

2. Chaîne à maillons selon la revendication 1, caractérisée en ce que la cavité (49) ou la dent (24a, 34, 40, 40a) est disposée au centre entre le premier et le second axe de pivotement.

3. Chaîne à maillons selon la revendication 1, caractérisée en ce que la cavité (93) est plus proche de l'un des premier et second axes de pivotement que de l'autre des premier et second axes de pivotement dans la direction longitudinale du corps de maillon.

4. Chaîne à maillons selon la revendication 1, 2 ou 3, caractérisée en ce que la paroi (36, 38 ; 36a, 38a ; 42, 44, 42a, 44a ; 51) est dirigée vers l'intérieur par l'intermédiaire de la partie centrale (16, 16a) depuis l'une des parties latérales (18, 20 ; 18a, 20a) et vers la partie latérale en regard (20, 18 ; 20a, 18a).

5. Chaîne à maillons selon la revendication 1, 2, 3 ou 4, caractérisée en ce que ladite paroi (36, 38 ; 36a, 38a ; 42, 44, 42a, 44a ; 51) est disposée entre les parties latérales (18, 20 ; 18a, 20a) et passe par la partie centrale (16).

6. Chaîne à maillons selon la revendication 1, 2 ou 3, caractérisée en ce que ladite paroi (21 ; 46, 48 ; 90, 92) dépasse vers l'extérieur de l'une des parties latérales (18, 20 ; 18a, 20a) et s'écarte de la partie latérale en regard (20, 18 ; 20a, 18a).
